# EUROPEAN PATENT APPLICATION

(11) **EP 4 231 216 A1**
(43) Date of publication of application: **23.08.2023**
(21) Application number: 22186234.5
(22) Date of filing: 21.07.2022
(51) Int. Cl.: G06Q 10/08

(54) **CARGO LOADING SYSTEM AND CARGO LOADING METHOD USING THE SAME**

(30) Priority: 22.02.2022 KR 20220022645; 05.04.2022 KR 20220042135
(71) Applicant: DT international Co., Ltd, Gangnam-gu Seoul (KR)
(72) Inventor: Jung, Eun Woo, Seoul (KR)
(74) Representative: Lermer, Christoph

(57) **Abstract**

The present disclosure relates to a cargo loading system and a cargo loading method using the same. The present disclosure includes an input unit configured to receive first information including one or more of the volumes and weights of cargos and generate cargo information, a loading unit configured to generate loading information by determining the state in which the cargos have been disposed in a container by using the cargo information, and an output unit configured to output the loading information through an output device.

## Description

### BACKGROUND

### 1. Technical Field

The present disclosure relates to a cargo loading system and a cargo loading method using the same.

### 2. Related Art

The area of distribution (or a cargo) is divided into a procurement distribution, a production distribution, and a sales distribution. Distribution having a range in which required raw materials start from a supplier and are stored in a warehouse of a buyer is called a procurement distribution.

A labor cost has been increased due to the shortage of a labor force caused by an increase in the quantity of goods transported, which is attributable to global COVID-19. Accordingly, there is an increasing need to develop an automation and optimization system for a distribution system in order to supplement the increased labor cost.

If a problem in the disposing of things having a linear shape is called a one-dimensional problem and a problem in the disposing of things on a plane is called a two-dimensional problem, the category of a container loading problem may be classified as a three-dimensional problem, which is a problem related to the utilization of a space.

In a shape of a cargo that is a loading target, in early days, a small amount of box type cargos having the same size are loaded into a bin. However, as manufacturing forms according to consumer demands are subjected to multi-product small-volume, there is a need to develop an optimal solution which may be applied to multi-product cargo loading in addition to cargo loading for the same item.

In the past, a container loading task is chiefly performed by a company itself, or in a container terminal (CFS). Such a method has a problem in that it is inefficient and requires labor costs, etc. because a loading task chiefly depends on a manual task.

Recently, technologies for improving efficiency by taking a delivery order into consideration upon multi-product cargo loading are developed as in Korean Patent Application Publication No. 10-2016-0140035 (hereinafter referred to a "conventional technology").

However, such conventional technologies have problems in that a container space is not used to the maximum extent possible because a cargo is not loaded by taking the volume of the cargo into consideration and stability is low because a cargo is not loaded by taking into consideration the weight of the cargo.

### SUMMARY

Various embodiments are directed to providing a cargo loading system and a cargo loading method using the same, which can improve space utilization upon cargo loading.

Furthermore, various embodiments are directed to providing a cargo loading system and a cargo loading method using the same, which can improve stability upon cargo loading by loading a cargo by taking into consideration the weight of the cargo.

Furthermore, various embodiments are directed to providing a cargo loading system and a cargo loading method using the same, which can visualize the state in which a cargo is loaded into a container.

Furthermore, various embodiments are directed to providing a cargo loading system and a cargo loading method using the same, which load a cargo by destinations of the cargos, whether the cargos may be laid down and loaded, whether the cargos may be piled up and loaded, and whether the cargos may be rotated.

The present disclosure having the objects of solving the problems has the following construction and characteristics.

In an embodiment, a cargo loading system includes an input unit configured to receive first information including one or more of the volumes and weights of cargos and generate cargo information, a loading unit configured to generate loading information by determining the state in which the cargos have been disposed in a container by using the cargo information, and an output unit configured to output the loading information through an output device.

The cargo information may further include second information relating to destinations of the cargos, whether the cargos may be laid down and loaded, whether the cargos may be piled up and loaded, and whether the cargos may be rotated. The loading unit may include a disposition part configured to generate disposition information relating to the state in which the cargos have been disposed in an accommodation space of the container by using the volumes of the cargos and the second information, a calculation part configured to calculate the center of gravity of the cargos disposed in the accommodation space by using the disposition information and the first information, a comparison part configured to generate match information when the center of gravity of the cargos falls within a range of the center of gravity of the container and generate mismatch information when the center of gravity of the cargos does not fall within the range of the center of gravity of the container, and an adjustment part configured to generate adjustment information relating to the state in which the cargos have their locations changed and disposed so that the center of gravity of the cargos falls within the range of the center of gravity of the container when the comparison part generates the mismatch information.

In an embodiment, a cargo loading method includes step S1 of receiving first information including one or more of the volumes and weights of cargos through an input unit and generating cargo information, step S2 of generating loading information by determining the state in which the cargos have been disposed in a container by using the cargo information, and step S3 of outputting the loading information through an output device.

Furthermore, in the step S1, the cargo information may further include second information relating to destinations of the cargos, whether the cargos may be laid down and loaded, whether the cargos may be piled up and loaded, and whether the cargos may be rotated. The step S2 may include step S21 of generating disposition information relating to the state in which the cargos have been disposed in an accommodation space of the container by using the volumes of the cargos and the second information, step S22 of calculating the center of gravity of the cargos disposed in the accommodation space by using the disposition information and the first information, step S23 of generating match information when the center of gravity of the cargos falls within a range of the center of gravity of the container and generating mismatch information when the center of gravity of the cargos does not fall within the range of the center of gravity of the container, and step S24 of generating adjustment information relating to the state in which the cargos have their locations changed and disposed so that the center of gravity of the cargos falls within the range of the center of gravity of the container when the mismatch information is generated in the step S23.

The present disclosure having the construction and characteristics has an effect in that it can improve the space utilization of a container upon loading.

Furthermore, the present disclosure has an effect in that it can improve stability by loading a cargo by taking into consideration the weight of the cargo.

Furthermore, the present disclosure has an effect in that it can visualize the state in which a cargo is loaded into a container.

Furthermore, the present disclosure has an effect in that it can load cargos by taking into consideration destinations of the cargos, whether the cargos may be laid down and loaded, whether the cargos may be piled up and loaded, and whether the cargos may be rotated.

### BRIEF DESCRIPTION OF THE DRAWINGS

FIG. 1 is a schematic block diagram for describing a cargo loading system according to an embodiment of the present disclosure.
FIG. 2 is a schematic diagram for describing a cargo loading method using the cargo loading system according to an embodiment of the present disclosure.
FIG. 3 is a diagram for describing the state in which loading information has been output.
FIG. 4 is a diagram for describing the state in which loading information including a volume and weight has been output.
FIG. 5 is a diagram for describing the state in which information on the weights and zones of cargos have been output.
FIG. 6 is a schematic flowchart for describing a cargo loading method according to an embodiment of the present disclosure.
FIG. 7 is a diagram for describing the state in which dotted lines are output in an additional embodiment of the present disclosure.
FIG. 8 is a diagram for describing filling icons in an additional embodiment of the present disclosure.

### DETAILED DESCRIPTION

The present disclosure may be changed in various ways and may have various forms. Aspects (or embodiments) are to be specifically described in the specification. It is however to be understood that the present disclosure is not intended to be limited to a specific disclosure form and that the present disclosure includes all changes, equivalents, and substitutions which fall within the spirit and technical scope of the present disclosure.

Terms used in this specification are used to only describe specific aspects (or embodiments) and are not intended to restrict the present disclosure. An expression of the singular number includes an expression of the plural number unless clearly defined otherwise in the context. In this specification, a term, such as "include (or comprise)" or "have", is intended to designate the presence of a characteristic, a number, a step, an operation, an element, a part or a combination of them described in the specification, and should be understood that it does not exclude the existence or possible addition of one or more other characteristics, numbers, steps, operations, elements, parts, or combinations of them in advance.

All terms used herein, including technical terms or scientific terms, have the same meanings as those commonly understood by a person having ordinary knowledge in the art to which the present disclosure pertains, unless defined otherwise in the specification. Terms, such as those defined in commonly used dictionaries, should be construed as having the same meanings as those in the context of a related technology, and are not construed as ideal or excessively formal meanings unless explicitly defined otherwise in the application.

Terms, such as "a first" and "a second" described in this specification, are used to merely distinguish between different elements, and are not restricted by a fabricated sequence. The names of elements may not be the same in the detailed description and claims of the present disclosure.

Throughout the specification, when it is described that one part is "connected" to another part, this includes a case where the one part is "indirectly connected (including a physical connection and an electrical connection in a way to be capable of communication)" to the another part with a still another element interposed therebetween in addition to a case where the one part is "directly connected (including including a physical connection and an electrical connection in a way to be capable of communication)" to the another part.

According to various embodiments, each (e.g., a module or a program) of elements described in this document may include a single entity or a plurality of entities. According to various embodiments, one or more elements or operations of the aforementioned elements may be omitted or one or more other elements or operations may be added. Alternatively or additionally, a plurality of elements (e.g., modules or programs) may be integrated into a single element. In such a case, the integrated element may identically or similarly perform a function performed by a corresponding one of the plurality of elements before one or more functions of each of the plurality of elements are integrated. According to various embodiments, operations performed by a module, a program, or another element may be executed sequentially, in parallel, iteratively or heuristically, or one or more of the operations may be executed in different order or may be omitted, or one or more other operations may be added.

The term "module" used in this specification may include a unit implemented as hardware, software or firmware, and may be interchangeably used with a term, such as logic, a logical block, a part, or a circuit. The "module" may be an integrated part, or a minimum unit of a part or a part thereof, which performs one or more functions. For example, according to an embodiment, the "module" may be implemented in the form of an application-specific integrated circuit (ASIC).

A method according to various embodiments disclosed in this document may be included in a computer program product and provided. The computer program product may be traded as a product between a seller and a purchaser. The computer program product may be distributed in the form of a machine-readable storage medium (e.g., a compact disc read only memory (CD-ROM)) or may be distributed through an app store or directly between two user devices (e.g., smartphones) or online (e.g., download or upload). In the case of the online distribution, at least some of the computer program product may be at least temporarily stored or provisionally generated in a machine-readable storage medium, such as the memory of the server of a manufacturer, the server of an app store, or a relay server.

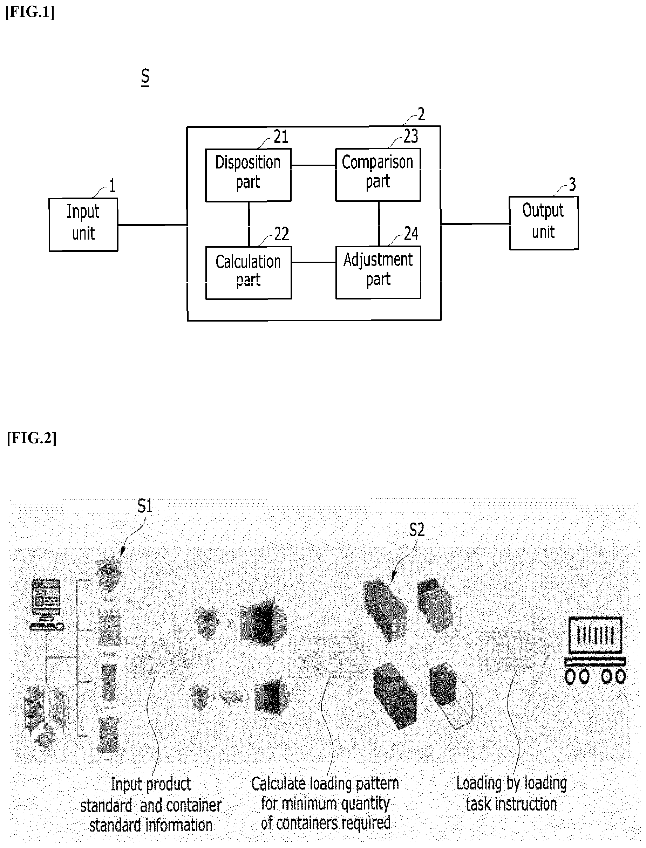

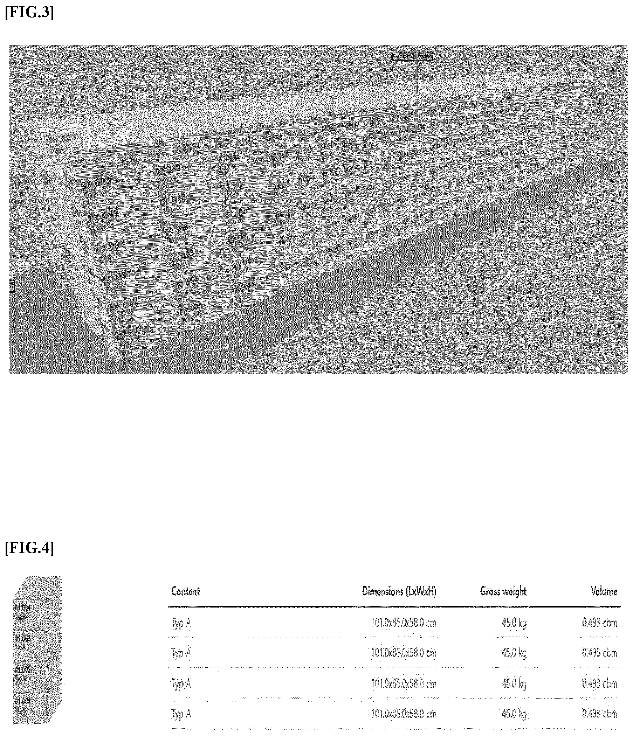

FIG. 1 is a schematic block diagram for describing a cargo loading system according to an embodiment of the present disclosure. FIG. 2 is a schematic diagram for describing a cargo loading method using the cargo loading system according to an embodiment of the present disclosure. FIG. 3 is a diagram for describing the state in which loading information has been output. FIG. 4 is a diagram for describing the state in which loading information including a volume and weight has been output.

A cargo loading system S according to an embodiment of the present disclosure is for efficiently and safely loading a cargo by taking into consideration the volume, weight, etc. of the cargo in a process of loading the cargo into a container, and is hereinafter referred to as "the present system" for convenience of description.

Referring to FIGS. 1 to 4, the present system (the cargo loading system S according to an embodiment of the present disclosure) includes an input unit 1, a loading unit 2, and an output unit 3.

Various control elements (e.g., various electronic devices or electronic modules, such as a computer and a processor) known to those skilled in the art may be applied to the input unit 1, the loading unit 2, and the output unit 3. For example, each of the input unit 1, the loading unit 2, and the output unit 3 may be an element that transmits, to each of the input unit 1, the loading unit 2, and the output unit 3, a signal or instruction generated by a program or algorithm (e.g., including a Stair algorithm) included therein. For example, the input unit 1, the loading unit 2, and the output unit 3 may have been mechanically connected, or may be separately provided and connected in a wired or wireless way.

The input unit 1 receives first information including one or more of the volumes and weights of cargos, and generates cargo information (refer to S1 in FIG. 2).

For example, the input unit 1 may include an input module (e.g., a touch screen) of a terminal, such as a smartphone, a tablet PC, or a PC. The input unit 1 may include a conversion module configured to generate the cargo information including the first information by converting, into a transmittable data signal, the first information received from the input module.

Furthermore, for example, the input unit 1 may not include the input module, and may include only the conversion module configured to receive first information from the input module (e.g., a PC including a touch screen, a keyboard, etc., or a smartphone) and generate the cargo information.

The cargo is kept in a packing box, such as a box, a container, a sack, or a bag. Hereinafter, a cargo may mean a packing box that contains the cargo. A volume and weight included in the first information may mean the volume and weight of the packing box (hereinafter referred to as a "container").

The loading unit 2 receives the cargo information, and generates loading information (refer to S2 in FIG. 2) by determining the state in which the cargos have been disposed in a container by using the cargo information.

More specifically, the loading unit 2 may receive, from the input module, container information including a longitudinal length, transverse length, height, volume, and center of gravity of an accommodation space formed in a container, and may store the container information. Furthermore, the first information may include data relating to the volume of cargos.

In this case, the loading unit 2 may include a disposition part 21 including an arrangement unit configured to arrange the cargos for each volume. The loading unit 2 (e.g., the disposition part 21) may generate loading information by disposing cargos in the accommodation space (i.e., the quantity of cargos is determined) so that a difference between the volume of the accommodation space and the volumes of the cargos disposed in the accommodation space becomes a minimum.

The loading unit 2 may load multiple cargos in the accommodation space in a longitudinal direction and then load the cargos in a transverse direction or may load the cargos in the accommodation space in the transverse direction and then load the cargos in the longitudinal direction. Alternatively, the loading unit 2 may load the cargos in the longitudinal direction or the transverse direction and then pile up the cargos (load the cargos in a perpendicular direction). That is, the loading unit 2 may generate loading information by disposing the cargos in the accommodation space in the longitudinal direction, the transverse direction, and the vertical direction.

In this case, the longitudinal direction may mean the length direction of the container, the transverse direction may mean the width direction of the container, and the vertical direction may mean the height direction of the container.

As will be more specifically described in the following description, the loading information may include disposition information described later or adjustment information described later.

The loading unit 2 (e.g., the disposition part 21) may generate the loading information by determining a loading state of cargos in the accommodation space in a way to insert and dispose a cargo having a smaller volume between cargos having greater volumes so that loading efficiency is improved.

The present system has an advantage in that it can improve loading efficiency by taking into consideration the volume of cargos in a container as described above.

The present system may include the output unit 3 configured to output the loading information through an output device (e.g., a monitor). The output unit 3 may include a change module configured to convert the loading information into an output signal so that the loading information is output through the monitor (i.e., the output device), for example. Furthermore, the output unit 3 may include the monitor configured to output the output signal or may not include the monitor.

It has been described above that the loading unit 2 may store information (i.e., the container information) of the container. The output unit 3 may output the container information through the output device.

Referring to FIG. 3, the container information may be output in the form of a 2-D or 3-D image by the output unit 3 and the loading information may be output in a form, such as a 2-D or 3-D image or text by the output unit 3. Accordingly, the loading information and the container information can be visualized.

Furthermore, the output unit 3 may output the cargo information in a form, such as graphics and text, through the output device in addition to the loading information (refer to FIG. 4).

Referring to FIGS. 1 to 4, the cargo information may further include second information that includes information on destination of cargos, whether the cargos may be laid down and loaded, whether the cargos may be piled up and loaded, and whether the cargos may be rotated (whether cargos can be rotated and loaded).

The cargo information may further include various types of information (e.g., information on a packing form, a standard, a quantity, and the owner of goods) of cargos in addition to the first information and the second information.

The second information is also received by the input module like the first information. The input unit 1 may receive the second information from the input module and generate the cargo information including the second information.

In this case, the first information may include information on the volume of cargos. The loading unit 2 may include the disposition part 21 configured to generate disposition information in which cargos are disposed in the accommodation space of the container by determining the state in which the cargos have been disposed in the accommodation space by using the volumes of the cargos and the second information.

As will be more specifically described in the following description, if a comparison part 23 described later does not generate mismatch information described later and generates match information, the loading information may include the disposition information (In contrast, if the comparison part 23 generates the mismatch information, the loading information may include adjustment information described later).

For example, the disposition part 21 may include an arrangement unit configured to arrange cargos by classifying the cargos for each volume (e.g., arrange the cargos in ascending order) and a priority assignment unit configured to prioritize conditions (e.g., information on destinations of cargos, whether the cargos may be laid down and loaded, whether the cargos may be piled up and loaded, and whether the cargos may be rotated) of the second information and volume conditions included in the first information.

Furthermore, the disposition part 21 may include an execution unit configured to generate disposition information relating to the state in which cargos are disposed in the accommodation space of the container by determining the state in which the cargos have been disposed in the accommodation space by using the volumes of the cargos, the second information, and the priorities.

For example, the priority assignment unit may determine priorities by assigning the first rank to a destination of a cargo and the second rank to the volume of the cargo. In this case, the execution unit may take into consideration the destination of the cargo in preference to the volume of the cargo, and may dispose a cargo having a long destination farther from the entrance of a container than a cargo having a short destination. Thereafter, the execution unit may generate the disposition information by loading cargos in the accommodation space so that a difference between the volume of the accommodation space and the volumes of cargos loaded in the accommodation space becomes a minimum by taking into consideration the volumes of the cargos.

In the aforementioned description, only the destinations and volumes of the cargos have been taken into consideration for understanding. However, the priority assignment unit may determine priorities by taking into consideration all of the volumes of cargos and the second information. The execution unit may generate the disposition information by taking into consideration all of the volumes of the cargos, the second information, and the priorities.

If the comparison part 23 described later does not generate mismatch information and generates match information, the loading information may include the disposition information.

It has been described above that the loading information is output through the output device by the output unit 3. The present system has an advantage in that it can provide a user with a simulation screen in which cargos are disposed in a container by taking into consideration destinations of the cargos, whether the cargos may be laid down and loaded, whether the cargos may be piled up and loaded, whether the cargos may be rotated, etc., in addition to the volumes of the cargos. Likewise, the output unit 3 may output cargo information including the second information.

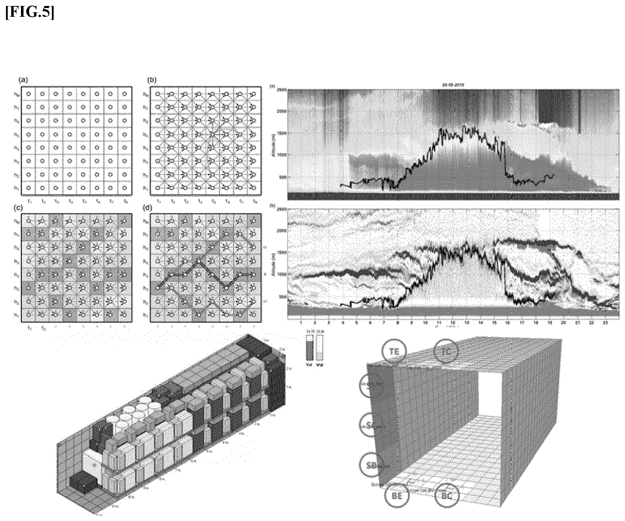

FIG. 5 is a diagram for describing the state in which information on the weights and zones of cargos have been output.

Referring to FIGS. 1, 3, and 5, the first information may include information on the weights of cargos. The loading unit 2 may include a calculation part 22 configured to calculate the center of gravity of cargos disposed in the accommodation space by using the disposition information and the first information (including information on the weights of the cargoes).

The disposition information includes the state in which cargos have been disposed in the accommodation space. The calculation part 22 may receive the disposition information, and may calculate the center of gravity of cargos disposed in the accommodation space (the center of gravity of each cargo may be set as a central location of each cargo) by using the weight of the cargos, which is included in the first information, in the state in which the cargos have been disposed in the accommodation space.

Furthermore, the loading unit 2 may include the comparison part 23 configured to determine whether the center of gravity of cargos falls within the range of the center of gravity of the container (i.e., the center of gravity of the container in the state which cargos have not been disposed in the accommodation space of the container).

It has been described above that the loading unit 2 may receive and store the container information including the center of gravity of the container. The comparison part 23 may receive and store the container information including the center of gravity of the container, and may set the range of the center of gravity of the container relating to a zone (e.g., a zone formed by a specific radius (e.g., 1 m) at a center point in a spherical form) by using the center of gravity of the container as the center point.

In this case, the comparison part 23 may generate match information when the center of gravity (a coordinate value) of the cargos falls within the range of the center of gravity of the container, and may generate mismatch information when the center of gravity of the cargos does not fall within the range (reference range) of the center of gravity of the container.

Furthermore, the loading unit 2 may include an adjustment part 24 configured to generate adjustment information relating to the state in which the cargos have their locations changed and disposed so that the center of gravity of the cargos falls within the range of the center of gravity of the container when the comparison part 23 generates mismatch information.

For example, the adjustment part 24 may include a partition part configured to partition the accommodation space into multiple zones.

Furthermore, the adjustment part 24 may include a moving unit that includes one or more of an out-of-zone moving unit configured to move a cargo in any one (e.g., a first large zone) of multiple zones (e.g., a large zone) to another zone (e.g., a second large zone) of the multiple zones when receiving mismatch information, and an intra-zone moving unit configured to move the cargo in the zone (i.e., the first large zone) to another location within the zone (i.e., the first large zone) when receiving the mismatch information.

The partition part may partition the large zone into zones each having a smaller size (i.e., small zones) based on the number of times that the mismatch information is generated. The out-of-zone moving unit may move a cargo from a zone having a smaller size (e.g., a first small zone) to another zone (e.g., a second small zone). The intra-zone moving unit may change the location of the cargo in the zone having a smaller size (the first small zone) within the first small zone.

When the moving unit repeatedly changes the locations of cargos and then the comparison part 23 generates match information (i.e., the comparison part 23 generates the match information after generating mismatch information at least once), the loading unit 2 may include a generation part configured to generate loading information including adjustment information that is generated by the adjustment part and that is related to the state in which the cargos have their locations changed and disposed.

If the comparison part 23 never once generates mismatch information and generates match information, the generation part may generate loading information including the disposition information.

That is, when receiving match information from the comparison part 23, the generation part may determine whether mismatch information has been generated, may generate loading information including disposition information if mismatch information has not been generated, and may generate loading information including adjustment information if mismatch information has been generated.

Accordingly, the present system has an advantage in that it can prevent a container from being inclined by minimizing the occurrence of moment in the container in which cargoes have been disposed in the accommodation space of the container.

The input unit 1, the loading unit 2, the output unit 3, etc. may be nodes on a blockchain. Data blocks including information generated by the input unit 1, the loading unit 2, and the output unit 3 may be distributed and stored in the blockchain. The blockchain is used in various fields, and a more detailed description thereof is omitted.

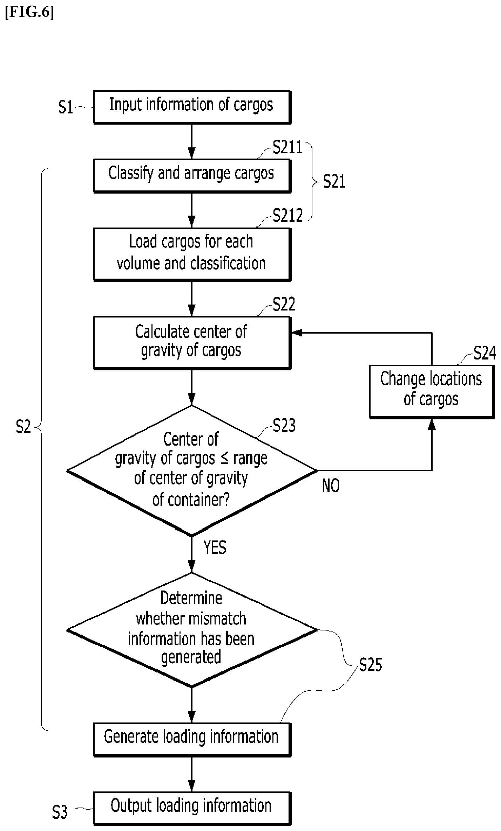

FIG. 6 is a schematic flowchart for describing a cargo loading method according to an embodiment of the present disclosure.

Hereinafter, a cargo loading method (hereinafter referred to as "the present method") according to an embodiment of the present disclosure is described. However, the present method is a cargo loading method using the present system, and includes technical characteristics identical with or corresponding to those of the present system. Accordingly, the same reference numeral is used in an element identical with or similar to the aforementioned element, and a redundant description of the element is simply given or omitted.

Referring to FIGS. 1 to 6, the present method includes step S1 of receiving first information including one or more of the volumes and weights of cargos through the input unit 1 and generating cargo information.

Furthermore, the present method includes step S2 of determining the state in which the cargos have been disposed in a container by using the cargo information and generating loading information. Step S2 is performed by the loading unit 2.

Furthermore, the present method includes step S3 of outputting the loading information through the output device. Step S3 is performed by the output unit 3.

Step S2 includes step S21 of generating disposition information relating to the state in which the cargos have been disposed in the accommodation space of the container by using the volumes of the cargos and second information. Step S21 is performed by the disposition part.

Step S21 may include step S211 of arranging the cargos by classifying the cargos for each volume and step S212 of generating the disposition information relating to the state in which the cargos have been disposed by determining the priorities of conditions (information on destinations of the cargos, whether the cargos may be laid down and loaded, whether the cargos may be piled up and loaded, and whether the cargos may be rotated) of the second information and volume conditions included in the first information and determining the state in which the cargos have been disposed in the accommodation space by using the volumes of the cargos, the second information, and the priorities.

Furthermore, step S2 may include step S22 of calculating the center of gravity of the cargos disposed in the accommodation space by using the first information including the disposition information and information on the weights of the cargos. Step S22 may be performed by the calculation part 22.

Furthermore, step S2 may include step S23 of generating match information when the center of gravity of the cargos falls within the range of the center of gravity of the container and generating mismatch information when the center of gravity of the cargos does not fall within the range of the center of gravity of the container. Step S23 may be performed by the comparison part 23.

Furthermore, step S2 may include step S24 of generating adjustment information relating to the state in which the cargos have their locations changed and disposed so that the center of gravity of the cargos falls within the range of the center of gravity of the container when the mismatch information is generated in step S23. Step S24 may be performed by the adjustment part 24.

Step S24 may include step S241 of partitioning the accommodation space into multiple zone.

Furthermore, step S24 may include step S241 that includes one or more of step S241a of moving a cargo in any one of multiple zones (e.g., a first zone) to another zone (e.g., a second zone) of the multiple zones when receiving mismatch information and step S241b of moving a cargo in the zone (i.e., the first zone) to another location within the zone (i.e., the first zone).

The partition part may partition a large zone into zones each having a smaller size (i.e., small zones) based on the number of times that the mismatch information is generated. The out-of-zone moving unit may move cargos from a zone having a smaller size to another zone. The intra-zone moving unit may change the locations of cargos within a zone having a smaller size.

Furthermore, step S2 may include a generation step S25 that includes step S251 of generating the loading information including the disposition information when the comparison part 23 generates match information without generating mismatch information and step S252 of generating the loading information including the adjustment information when the comparison part 23 generates match information after generating mismatch information.

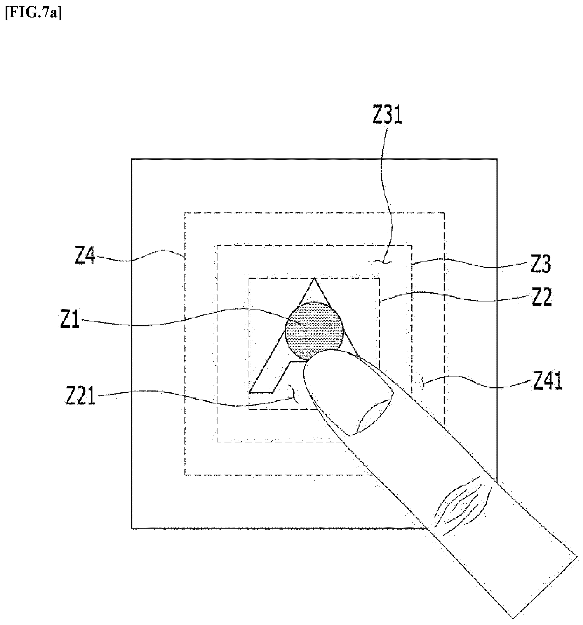

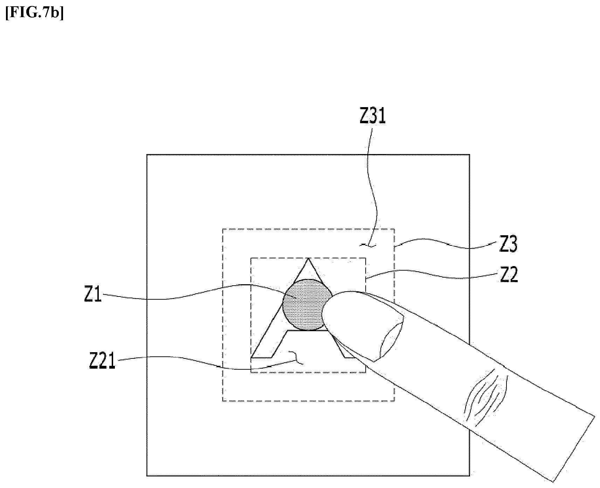

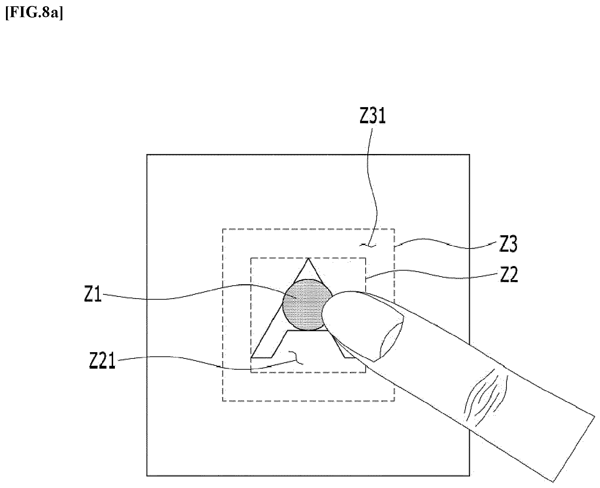

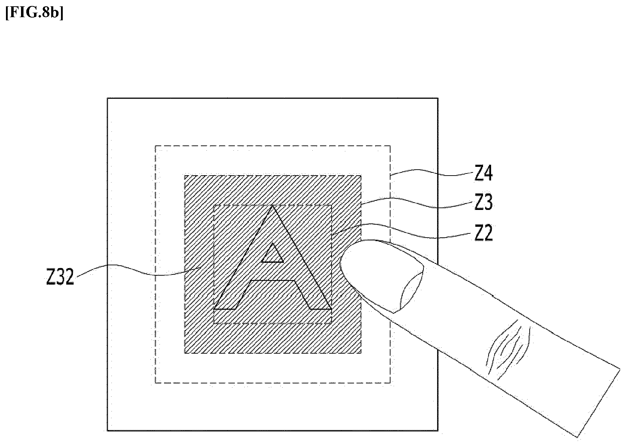

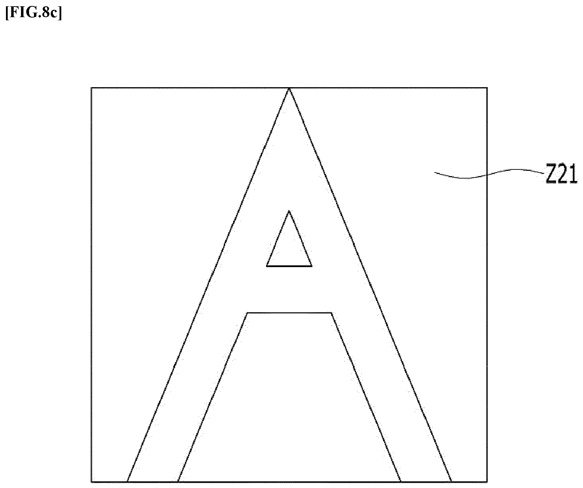

FIG. 7 is a diagram for describing the state in which dotted lines are output in an additional embodiment of the present disclosure. FIG. 8 is a diagram for describing filling icons in an additional embodiment of the present disclosure.

Referring to FIGS. 1, 3 to 5, 7, and 8, a user of the output unit 3 may want to enlarge and watch a specific part of a terminal screen (i.e., the output device) in detail. For example, if the user wants to enlarge and watch the destination (e.g., a specific part "A" in FIG. 7) of a cargo in the output terminal screen, the user may need to enlarge an area that includes the destination part of the cargo as much as possible.

In particular, elderly people who suffer from presbyopia may need to enlarge a specific area.

In order to satisfy such a need, the output unit 3 may include a client including an enlargement interface for enlarging an area that is selected in the terminal screen.

The output unit 3 may store a client installation file. The output device may install the client by downloading the installation file.

Alternatively, if the output unit 3 includes the output device, the output unit 3 may include the client installed in the output device.

Conventionally, if a specific area is to be enlarged, there is used a method of adjusting the size of a screen by tapping on a touch screen (or a terminal screen) several times or adjusting the distance between two fingers (e.g., the thumb and the forefinger) in the state in which the touch screen has been touched by the two fingers.

If the touch screen is tapped on several times, there is often a case where a part to be enlarged and watched cannot be checked in one screen because another part is enlarged in addition to the part to be enlarged and watched. Accordingly, an operation of moving a screen has to be performed.

Furthermore, if the distance between two fingers is adjusted in the state in which the touch screen has been touched by the two fingers, there is a problem in that it is difficult for a user to hold a terminal (e.g., a smartphone).

Furthermore, a terminal having a large size is recently used. In particular, there is a problem in that it is difficult for a user with a small hand size to enlarge a specific part of the terminal with his or her one finger while holding the terminal.

The enlargement interface is for overcoming the problems with the conventional method. The enlargement interface enables an area that is to be enlarged and watched to be output to one screen, but enables the area to be enlarged by using one finger. That is, the enlargement interface enables a desired specific part to be enlarged, but enables a terminal to be more easily held in order to effectively prevent damage to the terminal, etc.

Hereinafter, the enlargement interface is more specifically described. Referring to FIG. 7, if an arbitrary point on the terminal screen is first touched (e.g., the terminal screen is touched by a finger, etc.) and the touch state is maintained for a preset time (e.g., three seconds), the enlargement interface outputs a start point Z1. After the touch on the start point Z1 is released, when the start point Z1 is re-touched (or touched again) after a preset time (e.g., three seconds), the enlargement interface may output an inner dotted line Z2 that surrounds the start point Z1.

In contrast, after the touch on the start point Z1 is released, when the start point Z1 is re-touched within a preset time or another point on the terminal screen other than the start point Z1 is touched, the start point Z1 may be deleted.

Furthermore, when the touch on the start point Z1 is maintained for a preset time after the inner dotted line Z2 is output, the enlargement interface may output an outer dotted line Z3 that surrounds the inner dotted line Z2.

In this case, forms of an inner region Z21 that is formed by the inner dotted line Z2 and an outer region Z31 that is formed by the outer dotted line Z3 may correspond to forms in which the terminal screen has been reduced.

As in FIG. 7[B], when the touch on the start point Z1 is maintained for more than a preset time after the outer dotted line Z3 is output, the enlargement interface may output the outermost dotted line Z4 that surrounds the outer dotted line Z3. That is, the number of dotted lines that are output over time when the start point Z1 is touched is not limited.

Referring to FIG. 7 and FIG. 8[A], when a first point within the inner region Z21 (e.g., an arbitrary point within the inner zone Z21) is touched for more than a preset time (e.g., three seconds), the enlargement interface may output a first filling icon Z22 that covers the inner zone Z21.

Furthermore, when the first point is dragged to a zone (hereinafter referred to as a "neutral zone") between the inner dotted line Z2 and the outer dotted line Z3 (i.e., a finger that touches a terminal screen, such as a touch screen, is dragged in the state in which the finger has touched the terminal screen), the enlargement interface may output a second filling icon Z32 that covers the outer zone Z31.

Likewise, when a neutral zone between the inner dotted line Z2 and the outer dotted line Z3 is dragged to a neutral zone between the outermost dotted line Z4 and the outer dotted line Z3 in the state in which the outermost dotted line Z4 has been output, the enlargement interface may output a third filling icon.

The filling icon (i.e., the first filling icon Z22 or the second filling icon Z32) may have a translucent color, for example.

When a neutral zone between the inner dotted line Z2 and the outer dotted line Z3 is dragged to the inner zone Z21 after the second filling icon Z32 is output, that is, in the state in which the neutral zone has been touched, the second filling icon Z32 may be deleted, and the first filling icon Z22 may be output.

If the first filling icon Z22 has been output (refer to FIG. 8[A]), a touch on the first filling icon Z22 is released and the first filling icon Z22 is re-touched. Accordingly, the enlargement interface may enlarge the inner zone Z21 by preset magnification (refer to FIG. 8[C]).

If the second filling icon Z32 has been output (refer to FIG. 8[B]), a touch on the second filling icon Z32 is released and the second filling icon Z32 is re-touched. Accordingly, the enlargement interface may enlarge the outer zone Z31 by preset magnification.

In this case, the preset magnification may be magnification (e.g., twice or three times) at which the size of a zone (e.g., the inner zone Z21 or the outer zone Z31) selected in the terminal screen is maximized within the limit that the zone may be output to one screen.

The present system has an advantage in that a user can enlarge a specific zone with only his or her one finger in the state in which a terminal has been held by the user with his or her one hand although the size of a terminal is large and the size of a hand that holds the terminal is small because the present system includes the enlargement interface as described above.

More specifically, a zone to be enlarged can be previewed through only a movement of one finger by outputting dotted lines by only an operation of adjusting the time taken for a touch on one start point Z1 to be maintained and touching/re-touching (or touching again) a screen by using only one finger.

Furthermore, the start point Z1 is an arbitrary point that is selected by a user in the terminal screen. Accordingly, a specific part to be enlarged can be set by touching the specific part by using only one finger in the state in which a terminal has been held. Accordingly, there is an advantage in that a separate operation for operating the enlargement interface is not necessary because a separate start icon for generating the start point Z1 is not necessary.

Furthermore, the start point Z1 is output only when a touch state is maintained for a preset time after the first touch as described above. Accordingly, a malfunction that one part is enlarged because a terminal screen is touched due to an unwanted operation can be prevented. After checking whether the inner dotted line Z2 is output, a user may touch the start point Z1 again and then check whether the touch state has been maintained for more than a preset time.

Furthermore, in the state in which a malfunction has been prevented by the method, a user can easily enlarge, previously watch, and output a specific zone to be enlarged by outputting the outer zone Z31 in a way to only maintain a touch time for the start point Z1 without a process of releasing a touch on the start point Z1 and touching the start point Z1 again.

Furthermore, if the inner zone Z21 or the outer zone Z31 is to be enlarged, the inner zone Z21 or the outer zone Z31 can be enlarged as much as possible based on a shape of the terminal screen because the inner zone Z21 or the outer zone Z31 has a form in which the terminal screen has been reduced as described above. Accordingly, there is an advantage in that a user can previously check that which part of a specific part will be included in a zone to be enlarged (i.e., the inner zone Z21 or the outer zone Z31), before the inner zone Z21 or the outer zone Z31 is enlarged.

That is, a part to be enlarged when the inner zone Z21 is output may not be fully included in the inner zone Z21, which can be checked by a user through the inner zone Z21 in which a form of a terminal has been reduced. Accordingly, the output of the outer zone Z31 can be induced by further increasing a touch on the start point Z1.

Furthermore, it has been described that a zone (e.g., the inner zone Z21 or the outer zone Z31) to be output can be set through only an operation of dragging the first point to the neutral zone and an operation of dragging the neutral zone to the inner zone Z21. The neutral zone can be formed along the circumference of the terminal because the outer zone Z31 and the inner zone Z21 are zones reduced in size on the terminal screen, and the start point Z1 is disposed farther from the circumference of the terminal than the neutral zone. Accordingly, there is an advantage in that a zone to be output can be conveniently selected by only one finger because a movement to a convenient arbitrary point in the neutral zone is possible in the state in which the terminal has been held by using one hand.

Accordingly, there is an advantage in that the inner dotted line Z2 can be set as an enlarged zone without performing an operation of deleting the outer dotted line Z3 although the outer dotted line Z3 is output because the start point Z1 is unwantedly touched for a long time.

Furthermore, the specific part to be enlarged can be checked with the naked eye even after filling icons (e.g., the first filling icon Z22 and the second filling icon Z32) are output because the filling icons have a translucent color.

Furthermore, there is an advantage in that the enlargement of a zone selected due to a malfunction can be prevented because the inner zone Z21 or the outer zone Z31 is enlarged when a touch on filling icons is released and the filling icons are re-touched.

The present disclosure that has been described above with reference to the accompanying drawings may be variously modified and changed by those skilled in the art, and such modifications and changes should be construed as being included in the scope of right of the present disclosure.
FIG. 7 is a diagram for describing the state in which dotted lines are output in an additional embodiment of the present disclosure. FIG. 8 is a diagram for describing filling icons in an additional embodiment of the present disclosure.

Referring to FIGS. 1, 4, 9, and 10, a user of the user terminal 3 may want to enlarge and watch a specific part of a terminal screen (i.e., the output module) in detail. For example, if the user wants to enlarge and watch warehouse information (e.g., the specific part "A" in FIG. 7) in the output terminal screen, the user may need to enlarge an area that includes the warehouse information as much as possible.

In particular, elderly people who suffer from presbyopia may need to enlarge a specific area.

In order to satisfy such a need, the user terminal 3 may include a client (or the client may be installed in the user terminal 3) that includes an enlargement interface for enlarging an area selected in a terminal screen.

Conventionally, if a specific area is to be enlarged, there is used a method of adjusting the size of a screen by tapping on a touch screen (or a terminal screen) several times or adjusting the distance between two fingers (e.g., the thumb and the forefinger) in the state in which the touch screen has been touched by the two fingers.

If the touch screen is tapped on several times, there is often a case where a part to be enlarged and watched cannot be checked in one screen because another part is enlarged in addition to the part to be enlarged and watched. Accordingly, an operation of moving a screen has to be performed.

Furthermore, if the distance between two fingers is adjusted in the state in which the touch screen has been touched by the two fingers, there is a problem in that it is difficult for a user to hold a terminal (e.g., a smartphone).

Furthermore, a terminal having a large size is recently used. In particular, there is a problem in that it is difficult for a user with a small hand size to enlarge a specific part of the terminal with his or her one finger while holding the terminal.

The enlargement interface is for overcoming the problems with the conventional method. The enlargement interface enables an area that is to be enlarged and watched to be output to one screen, but enables the area to be enlarged by using one finger. That is, the enlargement interface enables a desired specific part to be enlarged, but enables a terminal to be more easily held in order to effectively prevent damage to the terminal, etc.

Hereinafter, the enlargement interface is more specifically described. Referring to FIG. 7, if an arbitrary point on the terminal screen is touched (e.g., the terminal screen is touched by a finger, etc.) and the touch state is maintained for a preset time (e.g., three seconds), the enlargement interface outputs a start point Z1. After the touch on the start point Z1 is released, when the start point Z1 is re-touched (or touched again) after a preset time (e.g., three seconds), the enlargement interface may output an inner dotted line Z2 that surrounds the start point Z1.

In contrast, after the touch on the start point Z1 is released, when the start point Z1 is retouched within a preset time or another point on the terminal screen other than the start point Z1 is touched, the start point Z1 may be deleted.

Furthermore, when the touch on the start point Z1 is maintained for a preset time after the inner dotted line Z2 is output, the enlargement interface may output an outer dotted line Z3 that surrounds the inner dotted line Z2.

In this case, forms of an inner region Z21 that is formed by the inner dotted line Z2 and an outer region Z31 that is formed by the outer dotted line Z3 may correspond to forms in which the terminal screen has been reduced.

As in FIG. 7b, when the touch on the start point Z1 is maintained for more than a preset time after the outer dotted line Z3 is output, the enlargement interface may output the outermost dotted line Z4 that surrounds the outer dotted line Z3. That is, the number of dotted lines that are output over time when the start point Z1 is touched is not limited.

Referring to FIG. 7 and FIG. 8a, when a first point within the inner region Z21 (e.g., an arbitrary point within the inner zone Z21) is touched for more than a preset time (e.g., three seconds), the enlargement interface may output a first filling icon Z22 that covers the inner zone Z21.

Furthermore, when the first point is dragged to a zone (hereinafter referred to as a "neutral zone") between the inner dotted line Z2 and the outer dotted line Z3 (i.e., a finger that touches a terminal screen, such as a touch screen, is dragged in the state in which the finger has touched the terminal screen), the enlargement interface may output a second filling icon Z32 that covers the outer zone Z31.

Likewise, when a neutral zone between the inner dotted line Z2 and the outer dotted line Z3 is dragged to a neutral zone between the outermost dotted line Z4 and the outer dotted line Z3 in the state in which the outermost dotted line Z4 has been output, the enlargement interface may output a third filling icon.

The filling icon (i.e., the first filling icon Z22 or the second filling icon Z32) may have a translucent color, for example.

When a neutral zone between the inner dotted line Z2 and the outer dotted line Z3 is dragged to the inner zone Z21 after the second filling icon Z32 is output, that is, in the state in which the neutral zone has been touched, the second filling icon Z32 may be deleted, and the first filling icon Z22 may be output.

If the first filling icon Z22 has been output (refer to FIG. 8a), a touch on the first filling icon Z22 is released and the first filling icon Z22 is retouched. Accordingly, the enlargement interface may enlarge the inner zone Z21 by preset magnification (refer to FIG. 8c).

If the second filling icon Z32 has been output (refer to FIG. 8b), a touch on the second filling icon Z32 is released and the second filling icon Z32 is retouched. Accordingly, the enlargement interface may enlarge the outer zone Z31 by preset magnification.

In this case, the preset magnification may be magnification (e.g., twice or three times) at which the size of a zone (e.g., the inner zone Z21 or the outer zone Z31) selected in the terminal screen is maximized within the limit that the zone may be output to one screen.

The present system has an advantage in that a user can enlarge a specific zone with only his or her one finger in the state in which the user has held a terminal with his or her one hand although the size of a terminal is large and the size of a hand that holds the terminal is small because the present system includes the enlargement interface as described above.

More specifically, a zone to be enlarged can be previewed through only a movement of one finger by outputting dotted lines by only an operation of adjusting the time taken for a touch on one start point Z1 to be maintained and touching/re-touching (or touching again) a screen by using only one finger.

Furthermore, the start point Z1 is an arbitrary point that is selected by a user in the terminal screen. Accordingly, a specific part to be enlarged can be set by touching the specific part by using only one finger in the state in which a terminal has been held. Accordingly, there is an advantage in that a separate operation for operating the enlargement interface is not necessary because a separate start icon for generating the start point Z1 is not necessary.

Furthermore, the start point Z1 is output only when a touch state is maintained for a preset time after the first touch as described above. Accordingly, a malfunction that one part is enlarged because a terminal screen is touched due to an unwanted operation can be prevented. After checking whether the inner dotted line Z2 is output, a user may touch the start point Z 1 again and then check whether the touch state has been maintained for more than a preset time.

Furthermore, in the state in which a malfunction has been prevented by the method, a user can easily enlarge, previously watch, and output a specific zone to be enlarged by outputting the outer zone Z31 in a way to only maintain a touch time for the start point Z1 without a process of releasing a touch on the start point Z1 and touching the start point Z1 again.

Furthermore, if the inner zone Z21 or the outer zone Z31 is to be enlarged, the inner zone Z21 or the outer zone Z31 can be enlarged as much as possible based on a shape of the terminal screen because the inner zone Z21 or the outer zone Z31 has a form in which the terminal screen has been reduced as described above. Accordingly, there is an advantage in that a user can previously which part of a specific part will be included in a zone to be enlarged (i.e., the inner zone Z21 or the outer zone Z31), before the inner zone Z21 or the outer zone Z31 is enlarged.

That is, a part to be enlarged when the inner zone Z21 is output may not be fully included in the inner zone Z21, which can be checked by a user through the inner zone Z21 in which a form of a terminal has been reduced. Accordingly, the output of the outer zone Z31 can be induced by further increasing a touch on the start point Z1.

Furthermore, it has been described that a zone (e.g., the inner zone Z21 or the outer zone Z31) to be output can be set through only an operation of dragging the first point to the neutral zone and an operation of dragging the neutral zone to the inner zone Z21. The neutral zone can be formed along the circumference of the terminal because the outer zone Z31 and the inner zone Z21 are zones reduced in the terminal screen, and the start point Z1 is disposed farther from the circumference of the terminal than the neutral zone. Accordingly, there is an advantage in that a zone to be output can be conveniently selected by only one finger because a movement to a convenient arbitrary point in the neutral zone is possible in the state in which the terminal has been held by using one hand.

Accordingly, there is an advantage in that the inner dotted line Z2 can be set as an enlarged zone without performing an operation of deleting the outer dotted line Z3 although the outer dotted line Z3 is output because the start point Z1 is unwantedly touched for a long time.

Furthermore, the specific part to be enlarged can be checked with the naked eye even after filling icons (e.g., the first filling icon Z22 and the second filling icon Z32) are output because the filling icons have a translucent color.

Furthermore, there is an advantage in that the enlargement of a zone selected due to a malfunction can be prevented because the inner zone Z21 or the outer zone Z31 is enlarged when a touch on filling icons is released and the filling icons are retouched.

The present disclosure that has been described above with reference to the accompanying drawings may be variously modified and changed by those skilled in the art, and such modifications and changes should be construed as being included in the scope of right of the present disclosure.

### [Description of reference numerals]

| | | | |
|---|---|---|---|
| S: | cargo loading system | | |
| 1: | input unit: | 2: | loading unit |
| 21: | disposition part | 22: | calculation part |
| 23: | comparison part | 24: | adjustment part |
| 3: | output unit | | |

## Claims

1. A cargo loading system comprising:
an input unit configured to receive first information comprising one or more of volumes and weights of cargos and generate cargo information;
a loading unit configured to generate loading information by determining a state in which the cargos have been disposed in a container by using the cargo information; and
an output unit configured to output the loading information through an output device.

2. The cargo loading system of claim 1, wherein:
the cargo information further comprises second information relating to destinations of the cargos, whether the cargos are capable of being laid down and loaded, whether the cargos are capable of being piled up and loaded, and whether the cargos are capable of being rotated,
the loading unit comprises:
a disposition part configured to generate disposition information relating to the state in which the cargos have been disposed in an accommodation space of the container by using the volumes of the cargos and the second information;
a calculation part configured to calculate a center of gravity of the cargos disposed in the accommodation space by using the disposition information and the first information;
a comparison part configured to generate match information when the center of gravity of the cargos falls within a range of a center of gravity of the container and generate mismatch information when the center of gravity of the cargos does not fall within the range of the center of gravity of the container; and
an adjustment part configured to generate adjustment information relating to a state in which the cargos have their locations changed and disposed so that the center of gravity of the cargos falls within the range of the center of gravity of the container when the comparison part generates the mismatch information.

3. A cargo loading method comprising:
step S1 of receiving first information comprising one or more of volumes and weights of cargos through an input unit and generating cargo information;
step S2 of generating loading information by determining a state in which the cargos have been disposed in a container by using the cargo information; and
step S3 of outputting the loading information through an output device.

4. The cargo loading method of claim 3, wherein:
in the step S 1, the cargo information further comprises second information relating to destinations of the cargos, whether the cargos are capable of being laid down and loaded, whether the cargos are capable of being piled up and loaded, and whether the cargos are capable of being rotated, and
the step S2 comprises:
step S21 of generating disposition information relating to the state in which the cargos have been disposed in an accommodation space of the container by using the volumes of the cargos and the second information;
step S22 of calculating a center of gravity of the cargos disposed in the accommodation space by using the disposition information and the first information;
step S23 of generating match information when the center of gravity of the cargos falls within a range of a center of gravity of the container and generating mismatch information when the center of gravity of the cargos does not fall within the range of the center of gravity of the container; and
step S24 of generating adjustment information relating to a state in which the cargos have their locations changed and disposed so that the center of gravity of the cargos falls within the range of the center of gravity of the container when the mismatch information is generated in the step S23.
